Europäisches Patentamt

(19) European Patent Office

Office européen des brevets

(11) Numéro de publication : **0 323 324 B1**

(12) **FASCICULE DE BREVET EUROPEEN**

(45) Date de publication du fascicule du brevet :
**11.12.91 Bulletin 91/50**

(51) Int. Cl.⁵ : **G01T 1/164, G01T 5/08**

(21) Numéro de dépôt : **88403287.1**

(22) Date de dépôt : **22.12.88**

(54) Radiochromatogramme à très haute résolution pour rayonnements ionisants.

(30) Priorité : **24.12.87 FR 8718179**

(43) Date de publication de la demande :
**05.07.89 Bulletin 89/27**

(45) Mention de la délivrance du brevet :
**11.12.91 Bulletin 91/50**

(84) Etats contractants désignés :
**AT BE CH DE ES GB GR IT LI LU NL SE**

(56) Documents cités :
**FR-A- 2 582 100
GB-A- 1 150 919
PATENT ABSTRACTS OF JAPAN, vol. 9, no.
334 (P-417)[2057], 27 décembre 1985, page 164
P 417; & JP-A-60 159 675 (SHIMAZU SEISA-
KUSHO K.K.) 21-08-1985**

(73) Titulaire : **CENTRE NATIONAL DE LA
RECHERCHE SCIENTIFIQUE (CNRS)
15, Quai Anatole France
F-75007 Paris (FR)**

(72) Inventeur : **Mastrippolito, Roland 1, rue des
Peupliers
Résidence des Peupliers Bâtiment 1
F-78370 Plaisir (FR)**
Inventeur : **Tricoire, Hervé
30, rue F. Coppée
F-91120 Palaiseau (FR)**
Inventeur : **Valentin, Luc
36, rue de Gometz
F-91440 Bures/Yvette (FR)**
Inventeur : **Raymond, Christophe
57, rue Lhomond
F-75005 Paris (FR)**
Inventeur : **Leblanc, Michel
70, rue Roger Salengro
F-92160 Antony (FR)**

(74) Mandataire : **Martin, Jean-Jacques et al
Cabinet REGIMBEAU 26, Avenue Kléber
F-75116 Paris (FR)**

EP 0 323 324 B1

## Description

La présente invention a été faite à l'Institut de Physique Nucléaire, Université de Paris XI, laboratoire associé à l'IN2 P3 N° 24024 et au laboratoire de Physique Nucléaire de l'Université de Paris VII.

Elle concerne un radiochromatogramme à très haute résolution pour rayonnements ionisants à grande vitesse de comptage.

L'utilisation d'isotopes marqués radioactivement dans les laboratoires de biologie a connu récemment un très grand développement en raison principalement de l'essor de la biologie moléculaire et des applications industrielles croissantes de celle-ci.

En effet, une expérience typique de biologie moléculaire consiste à faire migrer des acides nucléiques (ADN-ARN) sur un gel en effectuant une électrophorèse et à les hybrider avec les fragments d'acides nucléiques spécifiques marqués radioactivement. Lors de l'opération d'électrophorèse, les molécules migrent avec une vitesse inversement proportionnelle à leur masse. La localisation sur le gel des fragments radioactifs hybridés aux acides nucléiques ayant subi l'électrophorèse permet d'identifier la masse de ces derniers, cette indentification apportant toute une série d'informations au biologiste.

En biologie, le problème d'une identification en position d'isotopes radioactifs se retrouve, notamment dans la liste des opérations ci-après :

— analyse des "blots" ou séquences d'ADN qui se répartissent en taches ou zones spécifiques sur le gel, blots dont on recherche à analyser la position spatiale,

— séquençage de l'ADN,

— analyse de plages de phages recombinants,

— électrophorèse mono et bi-dimensionnelles de protétines.

Les produits biologiques utilisés dans ces techniques sont le plus souvent marqués avec des isotopes radioactifs émetteurs ($^{32}$P, $^{35}$S, $^{3}$H) lesquels émettent sporadiquement un électron présentant un spectre en énergie continu dont le maximum est voisin de Eo/2 ou Eo est l'énergie maximale de l'électron (Eo = 1,7 MeV ; 167 KeV, 18 KeV respectivement pour $^{32}$P, $^{35}$S, $^{3}$H).

Compte tenu de l'importance de ces techniques dans la biologie actuellement, il est essentiel d'optimaliser le processus de détection spatiale des émetteurs de rayonnement. Ce problème apparaît d'autant plus délicat que la résolution spatiale, inférieure à 1 mm, nécessaire à une telle détection doit être obtenue pour au moins une dimension sur des surfaces importantes, de l'ordre de 30 cm × 20 cm, les résultats d'expérience par électrophorèse pour un séquençage d'ADN se présentent sous forme de bandes réparties sur de telles surfaces ; chaque bande identifie la présence d'une nucléotide spécifique et doit être discriminée spatialement de la bande suivante selon sa dimension transversale notamment.

Actuellement, la détection est effectuée au moyen de film autoradiographique. Bien que cette solution offre une bonne résolution spatiale, laquelle pratiquement ne dépend que du grain de l'émultion photographique utilisée, elle présente cependant plusieurs inconvénients tels qu'une faible sensibilité, que l'impossibilité d'effectuer facilement des mesure d'intensité de rayonnement en raison des phénomènes de saturation, ou que la nécessité d'une analyse par observation visuelle ultérieure nécessairement sujette à interprétation.

Pour remédier à certains des inconvénients précités, des travaux visant à définir des appareils du type radiochromatogramme à haute résolution ont été entrepris. De tels types d'appareils ont notamment été décrits dans la revue "Nuclear Instruments & Methods in Physics Research" vol. 216, 1983 — Nov. No.3 Amsterdam, Nederland, dans un article intitulé "Scintillator — Fiber charged — particle track — imaging detector" publié par W.R. Binns, MH. Israel et J. Klarmann.

De tels dispositifs, s'ils permettent d'obtenir un degré de résolution acceptable du fait de l'utilisation d'un réseau de fibres optiques à scintillation, ne peuvent cependant prétendre atteindre des vitesses de comptage meilleures que 10 impacts par seconde, en raison de leur système de traitement du signal, lequel met en oeuvre un système intensificateur d'image de type CID comparable au dispositif à transfert de charge d'une caméra vidéo.

On connaît du document FR-A-2582100 un radiochromatogramme à haute résolution pour rayonnements ionisants comportant au moins un réseau constitué d'un ensemble d'éléments filiformes d'ordre i, susceptibles de permettre un repérage spatial d'une surface à analyser selon un repère d'axes déterminé et capables d'assurer la détection, par scintillation, des rayonnements et la transmission du rayonnement lumineux produit par cette détection et dont le réseau est formé de deux nappes constituées par des fibres optiques. Chaque fibre est disposée selon un segment de droite définissant deux directions d1, d2, orthogonales et délimitant un plan ou surface d'analyse. Au moins l'une des nappes, N1, est subdivisée en deux nappes élémentaires N11, N12, espacées dans une direction perpendiculaire au plan ou surface d'analyse d'une distance (HP). Les fibres (fi11, fi12) des nappes élémentaires N11, N12 étant parallèles.

La présente invention a pour but de mettre en oeuvre un chromatogramme à très haute résolution permettant d'atteindre de très grande vitesses de comptage.

Un autre objet de la présente invention est la mise en oeuvre d'un radiochromatogramme à très haute résolution dans lequel les circuits électroniques de traitement des impulsions engendrées sur détection d'un impact d'un particule sont de conception et de réalisation simple et peu onéreuse.

Un autre objet de la présente invention, est la mise en oeuvre d'un radiochromatogramme à très haute résolution et à très grande vitesse de comptage, dans lequel le bruit de fond est sensiblement réduit et permettant d'atteindre, dans au moins une direction d'analyse, une résolution inférieure ou égale à 0,3 mm.

Selon l'invention, lesdites fibres optiques (fi11, fi12 ; fi2 ou fi21, fi22) sont regroupées au niveau d'une de leur extrémité, de façon à former des sous-ensembles Fj,r avec r = 111, 112, 121, 122 ; 21, 22 ou 211, 212, 221, 222, r = abc désignant l'extrémité d'indice c (1 ou 2) des fibres de la nappe élémentaire $N_{ab}$ et r = ac désignant l'extrémité d'indice c des fibres de la nappe $N_a$, lesdits sous-ensembles

— Fj,r avec r = = 111, 112, 121, 122 résultant ainsi de la première N11 respectivement deuxième N12 nappe élémentaire constituant première nappe N1, d'une première part,

— Fj,r avec r = 21, 22 résultant ainsi de la deuxième nappe N2, ou Fj,r avec r = 211, 212, 221, 222 résultant ainsi de la première N21 respectivement deuxième N22 nappe élémentaire constituant deuxième nappe N2, d'une deuxième part, étant couplés à une première respectivement deuxième pluralité de moyens détecteurs Sk,r, ladite première, respectivement deuxième, pluralité de moyens détecteurs Sk,r avec r = 111, 112, 121, 122 respectivement r = 21, 22 ou 211, 212, 221, 222 est constituée par deux ou un photomultiplicateur multidynodes (P11, P12 ; P2 ou P21, P22), chacune des photocathodes de chaque photomultiplicateur multidynodes étant couplée à un des sous-ensembles Fj,r de même r.

L'invention trouve application dans les techniques de génie génétique, de biologie, tant au stade de l'expérimentation de recherche fondamentale qu'industrielle, à l'observation et au diagnostic médical.

Elle sera mieux comprise à la lecture de la description et à l'observation des dessins dans lesquels:

— la figure 1 représente une vue générale schématique du radiochromatogramme objet de l'invention,

— la figure 2a représente un détail de réalisation avantageux non limitatif du réseau R de fibres optiques du radiochromatogramme objet de l'invention,

— la figure 2b représente une variante de réalisation non limitative du réseau R tel que représenté en figure 2a,

— la figure 2c représente une autre variante de réalisation du réseau R de fibres optiques dans le cas où les nappes de fibres optiques N1 et N2 sont toutes deux subdivisées en nappes élémentaires,

— la figure 2d représente un mode particulier d'utilisation d'un radiochromatogramme objet de l'invention pour le séquençage de molécules d'ADN,

— la figure 3a représente une courbe indicative du pouvoir séparateur du radiochromatogramme objet de l'invention en fonction de la distance de séparation (HP) des nappes élémentaires, dans le cas où un gel d'électrophorèse à analyser, d'épaisseur nulle, est utilisé,

— la figure 3b représente une courbe indicative du pouvoir séparateur du radiochromatogramme objet de l'invention en fonction de la distance de séparation (HP) des nappes élémentaires, dans le cas où un gel d'électrophorèse à analyser d'épaisseur 0,3 mm est utilisé,

— la figure 4a représente un mode de réalisation particulièrement avantageux de moyens détecteurs ceux-ci étant constitués au niveau de chaque nappe élémentaire ou nappe constitutrice du réseau (R) par un photomultiplicateur multidynodes.

— la figure 4b représente un agencement relatif des fibres optiques constitutives d'une nappe élémentaire ou d'une nappe constituant le réseau R,

— la figure 4c représente l'agencement relatif des dynodes d'un photomultiplicateur multidynodes et de l'extrémité des fibres optiques de la nappe élémentaire ou nappe correspondante telle que représentée en figure 4b,

— la figure 5a représente un schéma synoptique fonctionnel des circuits de traitement électronique associés à chaque photomultiplicateur multidynodes,

— la figure 5b représente un schéma détaillé des moyens comparateurs à seuil recevant un signal amplifié délivré par les photomultiplicateurs multidynodes après amplification.

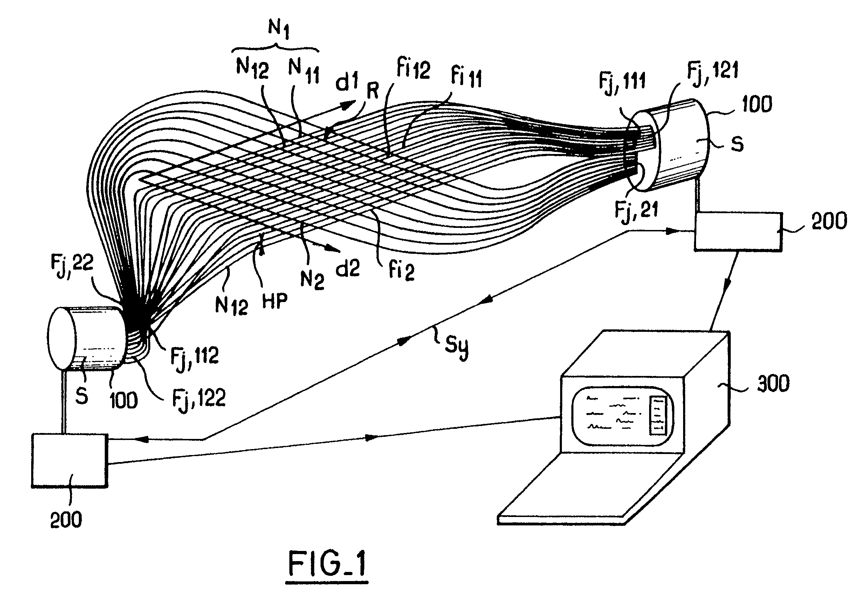

Le radiochromatogramme à très haute résolution objet de l'invention sera tout d'abord décrit en liaison avec la figure 1.

Conformément à la figure précitée, le radiochromatogramme à très haute résolution pour rayonnements ionisants,objet de l'invention, comporte au moins un réseau noté R, constitué d'un ensemble d'éléments filiformes d'ordre i, susceptibles de permettre un repérage spatial d'une surface à analyser selon un repère d'axe déterminé. Le réseau d'éléments filiformes est également capable d'assurer la détection par scintillation des rayonnements et la transmission du rayonnement lumineux produit par cette détection. Ainsi qu'on l'a représenté en figure 1, le réseau R présente une forme sensiblement plane, correspondant à la surface à analyser, le gel d'électrophorèse soumis à analyse étant disposé à proximité du réseau R précité.

Selon un aspect particulièrement avantageux du radiochromatogramme objet de l'invention, le réseau R est formé de deux nappes notées N1 et N2 constituées par des fibres optiques. Chaque fibre constitutive d'une nappe N1 ou N2 est respectivement disposée selon un segment de droite définissant deux directions notées d1 et d2 sur la figure 1 orthogonale. Ainsi, les directions d1, d2 délimitent le plan ou surface d'analyse précitée.

Ainsi qu'on l'a représenté en figure 1, de manière non limitative et à seul titre d'exemple, au moins l'une des nappes, la nappe N1, est subdivisée en deux nappes élémentaires notées N11 et N12. Les nappes élémentaires N11 et N12 sont espacées dans une direction perpendiculaire au plan ou surface d'analyse d'une distance notée HP. Bien entendu, les fibres optiques constituant la première nappe élémentaire N11, sont notées fi11 et les fibres optiques constituant la deuxième nappe élémentaire N12 sont notées fi12. Les fibres optiques constituant la deuxième nappe N2 sont notées fi2. Les fibres optiques fi11 et fi12 constitutives respectivement de la première et de la deuxième nappe élémentaire N11 et N12 sont parallèles et orientées dans la direction d1.

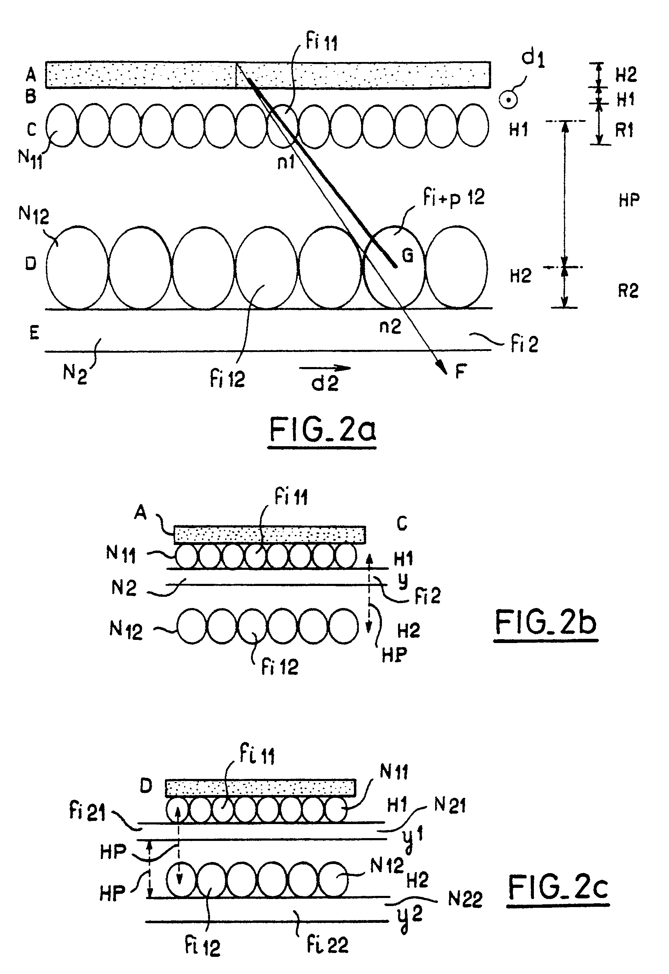

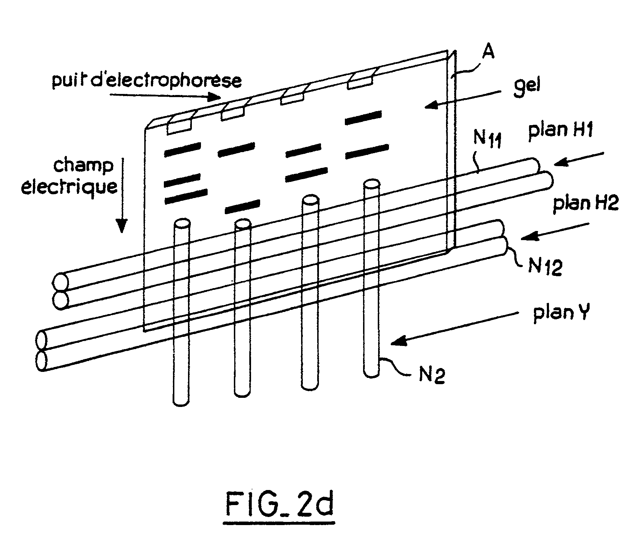

Le fait de prévoir une deuxième nappe élémentaire N12 par exemple, dont les fibres constitutives fi12 sont orientées dans la direction d1, permet, ainsi qu'il sera décrit ci-après plus en détail dans la description en liaison avec la figure 2a, d'améliorer la résolution dans la direction d2 perpendiculaire à la direction d1.

Sur la figure 2a, on a représenté en coupe une configuration particulière du réseau R dans laquelle les différents éléments seront définis ci-après.

On a représenté par la lettre A, le gel d'électrophorèse soumis à analyse sur le plan d'analyse constituée par le réseau R. Le gel d'électrophorèse ou filtre d'épaisseur noté H2, contient les émetteurs radioactifs à localiser. Le gel d'électrophorèse ou filtre d'épaisseur H2 précité est disposé sur le réseau R par l'intermédiaire d'une feuille intercalaire isolant les fibres, constituant la première nappe N11, dont les fibres optiques fi11 sont orientées dans la direction d1. La feuille intercalaire précitée est notée B et présente une épaisseur notée H1. On notera que la feuille intercalaire peut être constituée par une feuille de matériau plastique présentant une épaisseur de quelques dizièmes de millimètres. Les fibres optiques fi11 constituant la première nappe élémentaire N11 ont un diamètre noté R1 et la deuxième nappe élémentaire N12 est constituée par des fibres optiques notées fi12, lesquelles sont alignées dans la même direction d1. Les nappes élémentaires N11 et N12 sont séparées d'une distance notée HP, également sur la figure 2a, et les fibres optiques fi12 constituant la deuxième nappe élémentaire N12, sont réputées présenter un diamètre noté R2.

Bien entendu, la deuxième nappe N2 est constituée par des fibres optiques notée fi2, celles-ci étant orientées vers la direction d2. De préférence, la deuxième nappe N2 est adjacente à la deuxième nappe élémentaire N12. On note par F la trajectoire d'un électron émis par un élément radioactif situé dans le gel d'électrophorèse A. La trajectoire calculée d'un électron est notée G et celle-ci correspond bien entendu à la trajectoire reliant les centres optiques ou axes centraux des fibres notées n1 et n2, qui ont subi l'impact de l'électron émis par l'émetteur radioactif contenu dans le gel d'électrophorèse précédemment cité.

La détection de la lumière émise par scintillation dans chacune des fibres optiques du fait de l'impact de l'électron dans celle-ci, permet alors d'identifier le numéro des fibres touchées dans chaque nappe élémentaire, ainsi qu'il sera décrit de manière détaillée ultérieurement dans la description.

Les numéros d'ordre des fibres n1 et n2 correspondant par exemple aux fibres fi11 et fi + p12 des nappes élémentaires N11 et N12 étant déterminés, il est alors possible de déterminer une position calculée de l'émetteur radioactif à l'aide des relations :

1) $D1 = 2 \times n1 \times R1 - R1$

2) $D2 = 2 \times n2 \times R2 - R2$

3) $D = D1 + (D1 - D2) \times (H1 + R1 + H2/2)/HP$

Dans les relations précédentes, n1 et n2 représentent l'ordre i des fibres optiques de la nappe N11, N12, R1 et R2, le diamètre des fibres, H2 l'épaisseur du gel A, D1, D2 la position en distance de la fibres fi11, fi2 touchée par rapport à l'origine des fibres et D la position calculée.

On peut noter sur les relations précitées que la différence de position calculée pour deux fibres consécutives de la nappe élémentaire N12, lorsque ces fibres sont le siège d'un impact d'un électron, est d'autant plus faible que l'intervalle noté HP entre les nappes élémentaires N11 et N12 est plus grand. Le pouvoir séparateur du dispositif augmente donc avec l'intervalle HP, ce qui permet d'obtenir du radiochromatogramme de très haute résolution.

Différents modes de réalisation du réseau R seront maintenant décrits en liaison avec les figures 2b et 2c.

Alors que dans la figure 2a, les fibres optiques fi11, fi12 constituant les nappes élémentaires N11 et N12 sont situées d'un même côté par rapport à la nappe N2 constituée par les fibres optiques fi2, les fibres optiques fi11 ou fi12 constituant les nappes élémentaires N11 et respectivement N12 peuvent être situées ainsi que représenté en figure 2b. Dans ce cas, les fibres optiques fi11, fi12, constituant les nappes élémentaires N11 et N12, sont imbriquées avec les fibres optiques fi2 de la nappe N2.

De préférence, mais de façon non limitative, les fibres fi2 constitutives de la deuxième nappe N2 sont disposées dans l'intervalle HP séparant les deux nappes élémentaires N11 et N12 à proximité de la première nappe élémentaire N11 par exemple.

Dans le cas où les deux nappes N1 et N2 sont subdivisées en deux nappes élémentaires N11, N12, respectivement N21, N22, les différentes nappes élémentaires précitées sont intercalées ainsi que représenté en figure 2c. A titre d'exemple non limitatif, les fibres optiques fi21 constitutives de la première nappe élémentaire N21 sont situées dans l'intervalle HP séparant les deux nappes élémentaires N11 et N12 et les fibres optiques fi12 constitutives de la deuxième nappe élémentaire N12 sont situées dans l'intervalle HP séparant les deux nappes élémentaires N21 et N22 constituées par les fibres fi21 et fi22.

De façon non limitative, les fibres optiques fi11, fi12 et fi21, fi22 peuvent être constituées par des fibres optiques en matériau plastique, des fibres optiques scintillantes, de même diamètre.

Cependant, de préférence, les fibres optiques fi11 et fi12, respectivement fi21 et fi22, ont des diamètres différents. Dans un mode de réalisation particulièrement avantageux, le rapport des diamètres des fibres optiques précitées, rapport R1/R2 est égal à 1/2.

Des essais et simulations ont été effectués sur un radiochrommatogramme selon l'invention, comportant un réseau de fibres optiques telles que décrit précédemment, à partir d'un programme dérivé du programme décrit dans la thèse d'Université de C. RAYMOND, thèse intitulée "Radio-imageurs à fibres optiques plastiques scintillantes", soutenue le 26 Juin 1987 au Centre d'Orsay à l'Université de Paris-Sud. Le programme utilisé est une simulation de type Monte Carlo où tous les éléments physiques du détecteur sont pris en compte par paramétrisation : positionnement de l'émetteur, trajectoire aléatoire de l'électron, intersection avec les fibres optiques scintillantes, création des photons dans les fibres, conduction aux extrémités, efficacité des photocathodes de détecteurs, diaphotie, seuil électronique. Compte tenu de l'existence d'une première et d'une deuxième nappe élémentaire N11 et N12, la position XC obtenue après détection simultanée au moyen de l'algorithme précédent a été comparée à la position XR réelle de l'émetteur radioactif. L'histogramme de la distribution des valeurs XC-XR permet alors de connaître le pouvoir séparateur PS du dispositif, pouvoir séparateur PS donné par la largeur totale à mi-hauteur de l'histogramme.

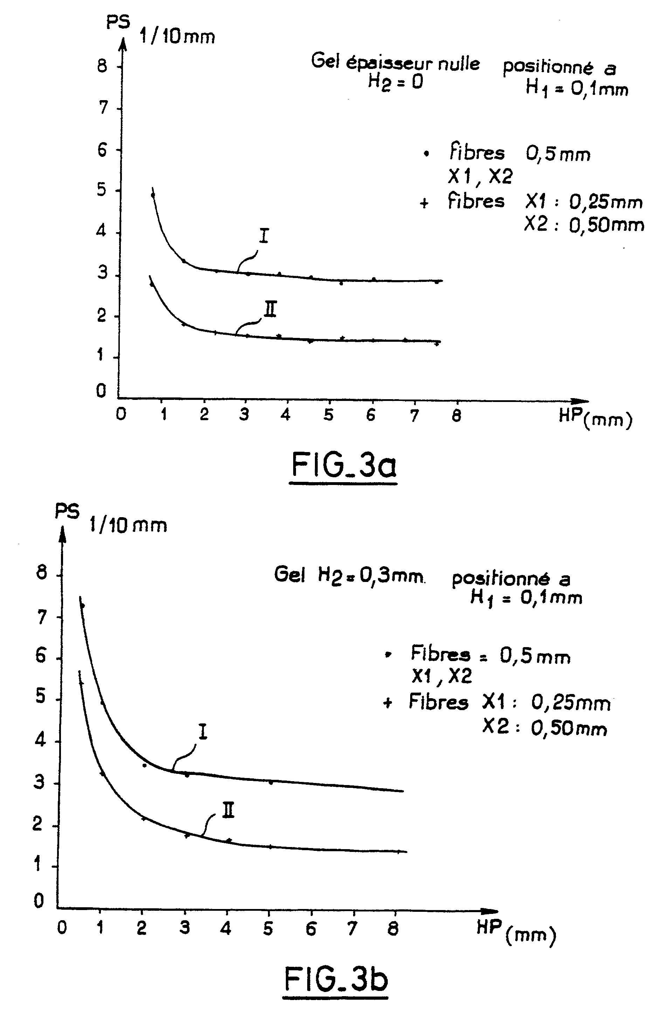

Sur la figure 3a, on a représenté les valeurs du pouvoir séparateur PS en fonction de l'écart HP et deux nappes élémentaires N11, N12 pour plusieurs configurations. Le cas de la figure 3a correspond à un gel d'électrophorèse d'épaisseur H2 sensiblement nulle. Au contraire, le cas de la figure 3b correspond à un gel d'électrophorèse d'épaisseur H2 égale à 0,3 mm. Dans les deux cas, la position du gel d'électrophorèse par rapport au plan d'analyse correspond à une distance H1 = 0,1 mm. Sur chaque figure 3a et 3b, on a porté en abscisse la valeur de l'intervalle HP exprimée en millimètre et en ordonnée l'écart XC-XR précité représentatif du pouvoir séparateur du radiochromatogramme selon l'invention dans la direction d2. Les valeurs de l'écart XC-XR portées en ordonnée sont exprimées en dizième de millimètres. Dans les deux cas, pour les figures 3a et 3b, on a représenté successivement la variation de l'écart XC-XR précitée d'une part pour des fibres fi11 et fi12 de même diamètre égal à 5 mm dans le cas de la courbe notée I, et pour des fibres optiques fi11, fi12 de diamètre différent, les fibres fi11 par exemple, ayant un diamètre de 0,25 mm et les fibres fi12 ayant un diamètre de 0,50 mm, courbe notée II.

Sur l'ensemble des figures 3a et 3b, on notera les résultats importants ci-après :

— le pouvoir séparateur du radiochromatogramme objet de l'invention, pouvoir séparateur dans la direction perpendiculaire à la direction d'alignement des fibres de la nappe ou nappe élémentaire correspondante s'améliore lorsque l'intervalle HP entre nappe élémentaire augmente ainsi que représenté sur les figures 3a et 3b,

— cependant, après une chute brutale de l'écart XC-XR, et une variation inverse du pouvoir séparateur, celui-ci tend à plafonner pour des valeurs de l'intervalle HP supérieures à environ 3 mm pour la configuration analysée.

— Le pouvoir séparateur obtenu pour un intervalle HP > que 3 mm est largement supérieur à celui obtenu avec des dispositifs à un seul plan ou à une seule nappe de l'art antérieur et dans les configurations telles que représentées en figure 3a et 3b, un pouvoir séparateur de l'ordre de 150 μm peut être atteint dans la direction d2.

— On n'observe pas de dégradation importante du pouvoir séparateur, lorsque les émetteurs épais, c'est-à-dire contenus dans un gel d'électrophorèse épais sont analysés, contrairement à ce que l'on peut observer avec utilisation de radiochromatogramme ne comportant qu'une nappe non subdivisée en nappes élémentaires. Ce dernier point est particulièrement important pour l'analyse directe des gels de séquence.

Bien entendu, le radiochromatogramme objet de l'invention, de par la configuration du réseau de fibres optiques tel que représenté en figure 2a, 2b, 2c, par exemple, ouvre un champ d'applications beaucoup plus vaste que les dispositifs radiochromatogramme de l'art antérieur. En particulier, avec un réseau R tel que configuré conformément à la figure 2c, le pouvoir séparateur dans les directions d1 et d2 peut alors être optimalisé dans les deux dimensions correspondantes. Cependant, dans ce dernier cas, l'efficacité du dispositif radiochromatogramme serait légèrement réduite dans l'état actuel de la technologie des fibres optiques scintillantes.

Les performances de pouvoir séparateur dans le direction d2 ou d1 par exemple obtenues dans le cas de la configuration représentée en figure 2a ou 2b, permettent d'utiliser le radiochromatogramme objet de l'invention pour la détection en ligne des radioéléments migrants dans des gels de séquence, selon le principe de la figure 2d.

Dans ce cas, le gel d'électrophorèse est amené pratiquement au contact du plan d'analyse constitué par la première nappe élémentaire N12, à l'une de ses extrémités, le gel d'électrophorèse n'étant séparé du plan d'analyse que par la feuille de séparation intercalaire notée B sur la figure 2a, et précédemment mentionnée. Les radioéléments migrent dans le gel et passent devant le réseau R du radiochromatogramme objet de l'invention. L'enregistrement simultané du temps de détection et de la position des électrons émis permet d'avoir le spectre en vitesse de migration des radioéléments, et avec un traitement informatique convenable de ce spectre, de déduire la séquence d'ADN correspondante. La migration des radioéléments est effectuée par l'intermédiaire du champ électrique appliqué au gel d'électrophorèse de manière classique.

L'amélioration des performances du radiochromatogramme objet de l'invention est pour l'essentiel dû au fait de l'utilisation de nappes de fibres optiques scintillantes subdivisées en nappes élémentaires, les nappes élémentaires étant séparées d'un intervalle déterminé. En outre, et de manière avantageuse, lorsque les fibres optiques constitutives des nappes élémentaires ont des diamètres différents, les fibres optiques de plus faible diamètre sont de préférence utilisées pour constituer la nappe élémentaire telle que la nappe N11 destinée à former la surface d'analyse.

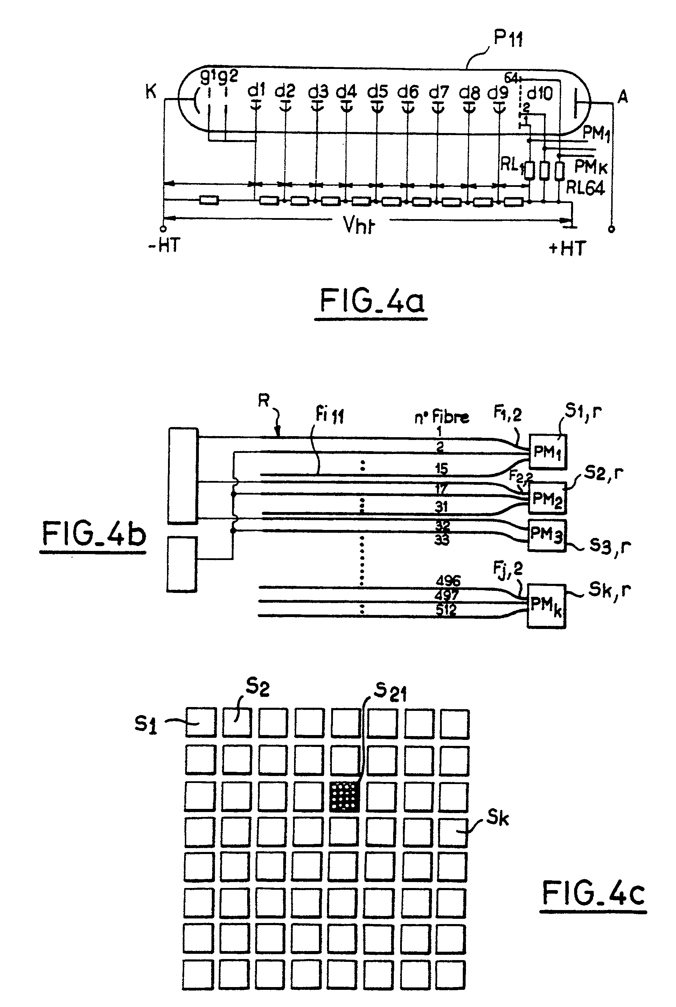

Une description plus détaillée des éléments permettant la détection des fibres optiques soumises à l'impact d'un électron émis par les émetteurs radioactifs sera maintenant donnée en liaison avec les figures 1 et 4a, 4b, 4c.

Ainsi qu'on l'a représenté en figure 1 notamment, les fibres optiques fi11, fi12, fi2, fi21, fi22, sont regroupées au niveau d'une de leur extrémité de façon à former des sous-ensembles notés Fj,r où r représente en fait le niveau de la nappe ou nappe élémentaire de fibres optiques constituant le réseau R.

Par convention et de façon non limitative, le paramètre r désignant le niveau des nappes ou nappes élémentaires constitutives du réseau R peut prendre les valeurs 111, 112, 121, 122 ; 21, 22 ou 211, 212, 221, 222.

Par convention et afin de faciliter la notation,
— les indices affectés aux références désignant les fibres optiques, ou les sous-ensembles, doivent être lus de la façon ci-après :
— fi12 : i désigne l'ordre de la fibre optique constituant la nappe élémentaire ou la nappe correspondante N11, N12 ou N2, N21, N22, le premier indice suivant indique l'ordre de la nappe de fibres optiques N1 ou N2, et le deuxième indice suivant indique l'ordre de la sous-nappe ou nappe élémentaire constitutive de la nappe précitée, nappe élémentaire notée N11, N12, ou N21, N22.

— L'indice r ayant les valeurs précédentes, le chiffre des centaines désigne l'ordre de la nappe, le chiffre des dizaines désigne l'ordre de la nappe élémentaire et le chiffre des unités désigne l'extrémité de chaque fibre optique constitutive des nappes ou nappes élémentaires de fibres optiques. $r = abc$ désigne donc l'extrémité d'indice c (1 ou 2) des fibres de la nappe élémentaire Nab et $r = ac$ désigne l'extrémité d'indice c des fibres de la nappe $N_a$.

Ainsi, le sous-ensemble Fj,r, avec $r = 111$ désigne le sous-ensemble d'ordre j constitué par un regroupement approprié des fibres de la première nappe élémentaire N11, à l'extrémité dite première extrémité 1 des fibres optiques constituant la première nappe élémentaire N11. De la même manière, le sous-ensemble Fj,r avec $r = 122$ par exemple, désigne le sous-ensemble d'ordre j de la deuxième nappe élémentaire N12, constituée à la deuxième extrémité des fibres constitutives de cette deuxième nappe élémentaire.

Ainsi, les sous-ensembles Fj,r avec $r = 111, 112, 121, 122$ résultant ainsi de la première N11, respectivement deuxième N12 nappe élémentaire, d'une première part, les sous-ensembles Fj,r avec $r – 21,22$ résultant ainsi de la deuxième nappe N2 et les sous-ensembles Fj,r avec $r = 211, 212, 221, 222$ résultant de la première N21, respectivement deuxième N22 nappe élémentaire constituant la deuxième nappe N2 sont couplés à des moyens détecteurs notés Sk,r. Bien entendu, les moyens détecteurs Sk,r pourront être constitués par des détecteurs discrets, l'indice k correspondant à l'indice j des sous-ensembles précédemment définis, un nombre de détecteurs discrets correspondant au nombre de sous-ensembles Fj précités étant prévu, et l'indice r correspondant également au niveau de la nappe élémentaire ou de la nappe constitutive du réseau R. Sur la figure 1, on a représenté de manière purement schématique, le regroupement des extrémités des fibres optiques en sous-ensembles Fj,r, dans le cas où le réseau R comporte une seule nappe de fibres optiques dédoublée ou nappes élémentaires, les nappes N11 et N12. Dans cette figure, les détecteurs Sk,r ont été représentés de manière symbolique par un détecteur unique, regroupant plusieurs détecteurs élémentaires. Ainsi que représenté également de manière schématique en figure 1, les détecteurs notés 100, détecteurs uniques sont commandés par des circuits de commande 200, lesquels sont eux-mêmes pilotés par un microordinateur 300. Une synchronisation par une liaison notée SY est réalisée entre les détecteurs précités, ainsi qu'il sera décrit plus en détail ultérieurement dans description.

Une description plus détaillée d'un mode de réalisation d'un radiochromatogramme objet de l'invention, tel que représenté en figure 1, sera donnée en liaison avec les figures 4a, 4b et 4c.

La description des figures 4a, 4b et 4c concerne la description d'un niveau r relatif à une nappe ou à une nappe élémentaire de fibres optiques constitutive du réseau R du radiochromatogramme objet de l'invention.

Conformément au mode de réalisation particulièrement avantageux précité, et ainsi que représenté en figure 4a, les moyens détecteurs $S_k,r$ sont réalisés sous forme de première, respectivement deuxième pluralité de moyens détecteurs $S_k,r$ et particulièrement de détecteurs discrets.

Dans le présent mode de réalisation, les moyens détecteurs peuvent être constitués par deux ou un photomultiplicateur multidynodes, les photomultiplicateurs multidynodes étant notés pour chaque nappe ou nappe élémentaire correspondante P11, P12, P21 ou P22, selon que les nappes N1, N2 sont subdivisées en nappes élémentaires N11, N12 ou N21, N22 ou non. Ainsi, les moyens de détection $S_k,r$, peuvent être constitués avantageusement par un photomultiplicateur multidynodes. Un tel photomultiplicateur multidynodes est commercialisé par la Société RTC, sous la référence commerciale XP 4702 et sous la dénomination commerciale photomultiplicateur multianodes. Un tel photomultiplicateur comporte une pluralité de sorties multidynodes plus une sortie anode commune correspondant sensiblement à la somme des sorties des 64 dynodes précédentes. Cette dernière sortie correspond en fait à l'électrode d'anode, laquelle délivre un signal de sortie correspondant sensiblement à la somme OU logique des sorties des 64 dynodes précédemment citées. Une représentation schématique d'un tel photomultiplicateur est représentée en figure 4a, les sorties dynodes au nombre de 64 étant notées $S_l,r...S_k,r$, conformément aux figures 4b ou 4c. Sur la figure 4a, la sortie d'anode est notée A et la photocathode correspondante est notée K.

Le photomultiplicateur précédemment cité se présente sous la forme d'un tube comportant 65 sorties ; les 64 premières sorties correspondant aux 64 dynodes indépendantes, associées à 64 pixels d'entrée ou zones d'accouplement d'un sous-ensemble $F_j,r$ de fibres fi11 ou autre fibres de niveau r considéré. La dernière sortie est constituée par l'anode précédemment citée qui réalise sensiblement un OU analogique entre l'ensemble des signaux délivrés par les 64 dynodes précitées. Chaque dynode a une dimension de 2 mm × 2 mm sensiblement au pas de 2,54 mm.

Sur la figure 4c, on a représenté l'agencement correspondant des dynodes précitées, une photocathode étant en fait associée à chacune de celles-ci. Ainsi, en utilisant des fibres optiques fi11 ou autres de diamètre inférieur à 0,5 mm, on peut donc grouper 16 fibres. A titre d'exemple non limitatif, à la photocathode $S_{21},r$ sont ainsi associées les extrémités de 16 fibres optiques fi11 notées de 1 à 16, l'autre extrémité de ces fibres optiques étant par exemple couplée, ainsi qu'il est représenté en figure 1b au niveau de chacune des photocathodes notées $S_{33},r$ à $S_{48},r$ respectivement. Ainsi, une loi de distribution commode des extrémités des fibres optiques fi11 pour constituer les sous-ensembles $F_j,2$ pour un ensemble de 512 fibres optiques, pourra consister à regrouper une première extrémité des fibres optiques en 32 groupes de 16 fibres qui sont réparties sur les photocathodes notées $S_1,r$ à $S_{32},r$ sur la figure 4c, l'autre extrémité des éléments filiformes fi11 étant regroupée de façon que chaque fibre fi11 d'ordre i soit couplée à son autre extrémité à la photocathode d'ordre $S_{32} + i,r$ par exemple. Ainsi, chaque fibre fi11 d'ordre i n'admet au plus pour sous-ensemble commun que deux sous-ensembles d'ordre j disctinct et deux fibres optiques d'ordre i différent, et de même niveau r, n'admettent au plus pour sous-ensembles communs qu'un seul de ces derniers. On comprendra bien entendu que chacune des photocathodes notées $S_k,r$ du photomultiplicateur multidynodes sont couplées à un sous-ensemble $F_j$ d'extrémité de fibre respectivement.

En vue d'assurer la détection et le comptage des impacts de particules ionisantes, le radiochromatogramme objet de l'invention pourra comporter des moyens de détection de coïncidence du signal délivré par les moyens détecteurs $S_k,r$ et des moyens de transcodage permettant à partir de la coïncidence de détection de deux moyens détecteurs $S_k,r$ ; $S_{k+p},r$ d'établir l'ordre i de l'élément filiforme fi correspondant.

L'ordre i de la fibre optique siège d'une détection par scintillation, fibre optique d'un niveau r donné correspondant à une fibre constitutive d'une nappe élémentaire ou d'une nappe déterminée, est donné par l'équation logique :

$$i = (F_j,r,i) \cap (F_j + p,r,i) \quad \text{relation 4}$$

Dans la relation (4), l'indice supplémentaire i attribué aux sous-ensembles $F_j,r$ de niveau r donné, correspond à l'ordre de la fibre du sous-ensemble pour laquelle un impact a été détecté, $F(j,r,i)$ et $F(j + p,r,i)$ représente les sous-ensembles d'ordre j et j + p d'une même nappe ou nappe élémentaire d'un même niveau r pour lesquels le signal logique délivré par les moyens détecteurs correspondants $S_k,r$ de même niveau r et d'ordre k = j et k' = j + p a la valeur 1.

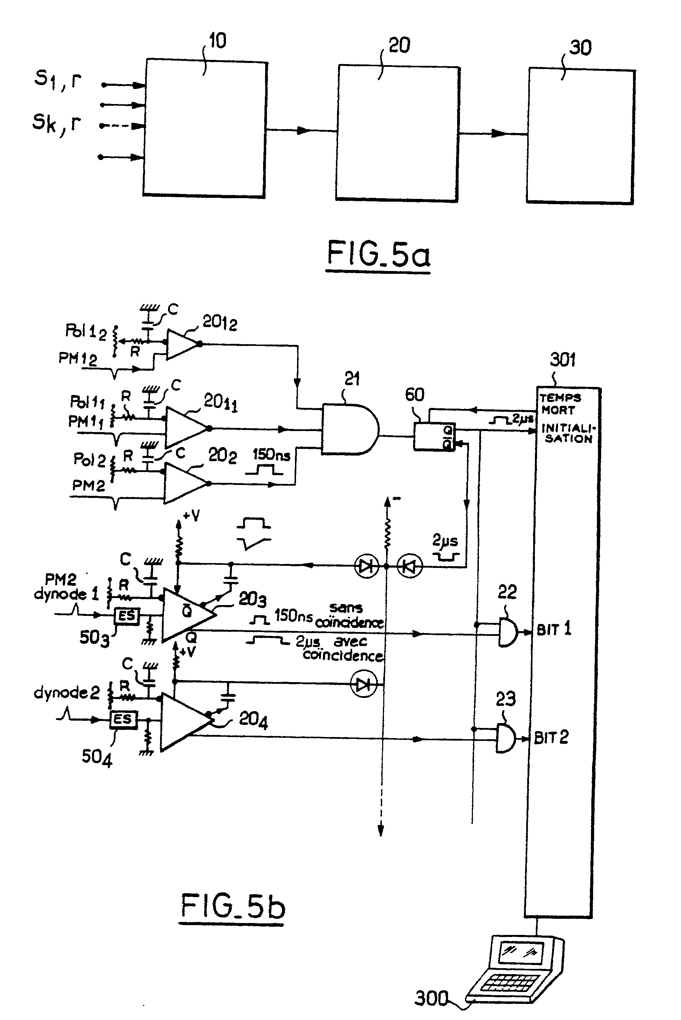

Une description plus détaillée des circuits électroniques permettant d'assurer la détection de l'ordre des fibres optiques constitutives de chaque nappe ou nappe élémentaire de fibre sera donnée en liaison avec les figures 5a et 5b.

De manière générale, les circuits électroniques précités comportent, ainsi que représenté notamment en figure 5a, des moyens de détection de coïncidence du signal délivré par les moyens détecteurs Sk,r de même niveau r et des moyens de transcodage permettant, à partir de la coïncidence de détection de deux moyens détecteurs Sk,r, Sk + p,r de même niveau r, d'établir l'ordre i de l'élément fibre optique fi11, fi12, fi2, fi21, fi22 correspondant conformément à l'équation logique précédemment décrite. Les moyens de détection de coïncidence du signal délivré par les moyens détecteurs Sk,r de même niveau r, correspondent au bloc fonctionnel 10 et 20 de la figure 5a et la matrice de transcodage précitée ou block 30, ainsi qu'il sera décrit ci-après dans la description.

De manière générale, les moyens de détection le coïncidence comportent, couplés à chaque moyen détecteur Sk,r des moyens amplificateurs 10 délivrant un signal amplifié et des moyens comparateurs 20 à seuil recevant le signal amplifié et délivrant un signal logique en présence d'un signal amplifié de valeur supérieure à la valeur de seuil. Des moyens 30 de comparaison logique de l'état du signal logique délivré par les moyens comparateurs à seuil sont en outre prévus.

Ainsi qu'il est en outre représenté en figure 5a, le radiochromatogramme objet de l'invention, afin d'assurer la détection de coïncidence d'impact des impulsions, peut être agencé de façon que les moyens de détection de coïncidence comportent, couplés à chaque moyen de détection noté Sk,r des moyens amplificateurs notés 10 délivrant un signal amplifié, des moyens comparateurs 20 à seuil recevant le signal amplifié et délivrant un signal logique en présence d'un signal amplifié de valeur supérieure à la valeur de seuil, et des moyens de comparaison 30, permettant d'assurer une comparaison logique de l'état du signal logique délivré par les moyens comparateurs à seuil 20. Sur la figure 5a, on a représenté en fait les moyens de détection Sk,r comme constitués par des photomultiplicateurs discrets. Ce mode de réalisation est donné à titre d'exemple purement illustratif, il est bien entendu que chaque photomultiplicateur discret peut être avantageusement remplacé par un photomultiplicateur multidynodes tel que décrit précédemment.

Une description plus détaillée des moyens comparateurs 20 à seuil sera donnée en liaison avec la figure 5b.

Cette description correspond au mode de réalisation de la figure 2a, dans laquelle la première nappe de fibres optiques N1 est subdivisée en nappes élémentaires N11, N12, en l'absence de subdivision de la N2. Il est bien entendu que dans le cas de la subdivision de la nappe de fibre optique N2, les circuits peuvent être complétés de façon à prendre en compte la subdivision précitée, de manière semblable à la subdivision de la nappe N1.

Conformément à la figure 5b précitée, les moyens 20 comparateurs à seuil peuvent comprendre une pluralité de comparateurs ou circuits à seuil élémentaires notés $20_{11}$ à $20_k$, un des circuits comparateurs élémentaires $20_{11}$, $20_{12}$, $20_2$ recevant le signal délivré par l'anode du premier P11, respectivement deuxième P12 ou troisième P2 photomultiplicateurs multidynodes associés à la première nappe élémentaire N11 ou deuxième nappe élémentaire N12 ou deuxième nappe N2 respectivement. Les autres circuits comparateurs élémentaires, notés $20_k$ reçoivent sur une première borne d'entrée le signal délivré par une dynode du premier P11, deuxième P12 et troisième P2 photomultiplicateurs. Un circuit ET 21 reçoit les signaux délivrés par les comparateurs à seuil $20_{11}$, $20_{12}$ et $20_2$. La sortie du circuit ET est envoyée sur un monostable 60. Une sortie de ce monostable 60 est reliée à un microordinateur d'exploitation 300.

Dans le mode de réalisation représenté en figure 5b, un sortie du monostable 60 est envoyée sur l'entrée de blocage des circuits à seuil $20_3$ à $20_k$. Dans ces conditions, le circuit à seuil se trouve bloqué dans l'état présent au moment de l'arrivée de l'impulsion du monostable 60 et reste dans cet état durant toute la durée de l'impulsion. Cette technique permet donc d'obtenir en sortie des comparateurs à seuil $20_3$ à $20_k$ des impulsions de sortie d'environ 2 μs lorsqu'à la fois un signal est présent sur une dynode et un signal de coïncidence est délivré par le monostable 60. Ces signaux de sortie allongés sont alors reliés sur une des entrées de circuits ET 22 à $2_k$. Sur l'autre entrée est envoyé le signal de sortie du monostable 60. Le signal de coïncidence résultant large d'environ 2 μs peut alors être envoyé directement dans une carte d'entrée sortie parallèle 301 incluse dans le microordinateur 300.

L'impulsion provenant du monostable 60 étant légèrement retardée par rapport aux impulsions dynodes, il faut s'assurer qu'en présence d'une signal de dynode le comparateur à seuil reste bien à un niveau haut jusqu'à ce que l'impulsion du monostable 60 arrive. Dans ce but, le signal de sortie du comparateur à seuil $20_3$ à $20_k$ est envoyé sur l'entrée de blocage du comparateur, au travers d'un circuit à résistance capacité RC. Ceci permet de maintenir le comparateur à un niveau haut pendant environ 150 μs, ce qui laisse le temps à l'impulsion du monostable 60 d'arriver.

Le radiochromatogramme à haute résolution, objet de l'invention, est particulièrement performant en raison des nombreux avantages qu'il présente par rapport aux radiochromatogrammes de l'art antérieur.

En particulier, le radiochromatogramme objet de l'invention présente une très grande simplicité de mise en oeuvre, en raison de l'utilisation notamment de photomultiplicateurs multidynodes.

En outre, l'analyse ultérieure du signal présente un très haut degré de simplicité puisque le codage des fibres est réalisé par un codage de type spatial et ne nécessite donc pas comme dans le cas de la détection par dispositif à transfert de charge, une analyse de forme du signal.

En outre, dans le mode de réalisation tel que décrit, une élimination quasi-totale du bruit de fond est obtenue par multi-coïncidence, deux coïncidences dans la direction D1 et deux coïncidences dans la direction D2, du fait de la subdivision des réseaux de fibres des nappes N1 et N2, en nappes élémentaires N11, N12, N21, N22 et Fj,r correspondants.

Enfin, un des avantages primordiaux du radiochromatogramme objet de l'invention réside surtout dans la possibilité de comptage à taux très élevé, compris entre $10^6$ et $10^7$ impacts par seconde, ce qui accroît nettement le domaine d'action potentiel de ce type de détecteur et de ses utilisations correspondantes. Ce chiffre doit en effet être comparé aux $10^2$ à $10^3$ impacts par seconde, qu'il était possible d'envisager avec les dispositifs de l'art antérieur.

En outre, et compte tenu de la séparation des nappes élémentaires N11, N12 et N21, N22 d'un intervalle HP, le pouvoir séparateur du radiochromatogramme objet de l'invention est sensiblement amélioré.

## Revendications

1. Radiochromatogramme à très haute résolution pour rayonnements ionisants, comportant au moins un réseau (R) constitué d'un ensemble d'éléments filiformes d'ordre i susceptibles de permettre un repérage spatial d'une surface à analyser selon un repère d'axes déterminé et capables d'assurer la détection, par scintillation, desdits rayonnements et la transmission du rayonnnement lumineux produit par cette détection, ledit réseau (R) étant formé de deux nappes N1 et N2 constituées par des fibres optiques, chaque fibre étant respectivement disposée selon un segment de droite définissant deux directions d1, d2 orthogonales et délimitant un plan ou surface d'analyse, au moins l'une des nappes N1 étant subdivisée en deux nappes élémentaires N11 et N12 espacées dans une direction perpendiculaire au plan ou surface d'analyse d'une distance (HP) et dont les fibres (fi11, fi12) sont parallèles, caractérisé en ce que lesdites fibres optiques (fi11, fi12 ; fi2 ou fi21, fi22) sont regroupées au niveau de leurs extrémités de façon à former des sous-ensembles Fj,r avec r = 111, 112, 121, 122 ; 21, 22 ou 211, 212, 221, 222, r = abc désignant l'extrémité d'indice c (1 ou 2) des fibres de la nappe élémentaire $N_{ab}$ et r = ac désignant l'extrémité d'indice c des fibres de la nappe $N_a$, lesdits sous-ensembles

— Fj,r avec r = 111, 112, 121, 122 résultant ainsi de la première N11 respectivement deuxième N12 nappe élémentaire constituant première nappe N1, d'une première part,

— Fj,r avec r = 21, 22 résultant ainsi de la deuxième nappe N2, ou Fj,r avec r = 211, 212, 221, 222 résultant ainsi de la première N21 respectivement deuxième N22 nappe élémentaire constituant deuxième nappe N2, d'une deuxième part, étant constitués de manière que les extrémités c = 1 et c = 2 d'une même fibre fiab ou fia appartiennent respectivement à des sous-ensembles Fj,ab1 et Fj',ab2 ou Fj,a1 et Fj',a2 d'ordre j différent, et lesdits sous-ensembles étant couplés à une première, respectivement deuxième, pluralité de moyens détecteurs Sk,r avec r = 111, 112, 121, 122, respectivement r = 21, 22 ou 211, 212, 221, 222, constituée par deux ou un photomultiplicateur multidynodes (P11, P12 ; P2 ou P21, P22), chacune des photo-cathodes de chaque photomultiplicateur multidynodes étant couplée à un des sous-ensembles Fj,r de même r.

2. Radiochromatogramme selon la revendication 1, caractérisé en ce que les fibres optiques (fi11, fi12) constituant les nappes élémentaires N11 et N12 sont situées d'un même côté par rapport à la nappe N2 constituée par les fibres optiques (fi2).

3. Radiochromatogramme selon la revendication 1, caractérisé en ce que les fibres optiques (fi11, fi12) constituant les nappes élémentaires N11 et N12 sont situées de part et d'autre de la nappe N2 constituée par les fibres optiques (fi2).

4. Radiochromatogramme selon la revendication 1, caractérisé en ce que lesdites nappes N1 et N2 étant subdivisées en deux nappes élémentaires N11, N12 et N21, N22, les fibres optiques (fi11, fi12 ; fi21, fi22) constituant lesdites nappes élémentaires N11, N12 et N21, N22 sont imbriquées lesdites nappes élémentaires étant intercalées.

5. Radiochromatogramme selon l'une des revendications précédentes, caractérisé en ce que lesdits fibres optiques (fi11, fi12 ; fi2 ou fi21, fi22) sont des fibres optiques de même diamètre.

6. Radiochromatogramme selon l'une des revendications 1 à 5, caractérisé en ce que lesdites fibres optiques (fi11) de la première nappe élémentaire N11 et lesdites fibres optiques (fi12) de la deuxième nappe élémentaire N12 d'une même nappe N1 ont un diamètre différent, les fibres optiques de plus faible diamètre étant aptes à constituer la nappe élémentaire N11 destinée à former la surface d'analyse.

7. Radiochromatogramme selon la revendication 6, caractérisé en ce que les fibres optiques (fi11, fi12 ; fi2 ou fi21, fi22) ont des diamètres dans un rapport 1/2.

8. Radiochromatogramme selon la revendication 1, caractérisé en ce que les photomultiplicateurs multidynodes sont auto-synchronisés.

9. Radiochromatogramme selon la revendication 1, caractérisé en ce qu'il comporte en outre :

— des moyens de détection de coïncidence du signal délivré par les moyens détecteurs Sk,r de même r,

— des moyens de transcodage permettant à partir de la coïncidence de détection de deux moyens détecteurs Sk,r ; Sk + p,r de même r d'établir l'ordre i de l'élément fibre optique (fi11, fi12 ; fi2 ou fi21, fi22) correspondant.

10. Radiochromatogramme selon la revendication 9, caractérisé en ce que lesdits moyens de détection de coïncidence comportent, couplés à chaque moyen détecteur Sk,r :

— des moyens amplificateurs (10) délivrant un signal amplifié,

— des moyens comparateurs (20) à seuil recevant ledit signal amplifié et délivrant un signal logique en présence d'un signal amplifié de valeur supérieure à la valeur de seuil,

— des moyens (30) de comparaison logique de l'état du signal logique délivré par les moyens comparateurs à seuil.

11. Radiochromatogramme selon la revendication 10, caractérisé en ce que l'ordre i de la fibre siège d'une détection par scintillation est donné par l'équation logique :

$$i = Fj,r,i \cap Fj + p,r,i$$

dans laquelle Fj,r,i et Fj + p,r,i représentent les sous-ensembles d'ordre j et j + p d'une même nappe ou nappe élémentaire, d'un même r, pour lesquels le signal logique délivré par les rayons détecteurs correspondant Sk,r de même r et d'ordre k = j et k' = j + p a la valeur 1.

12. Radiochromatogramme selon les revendications 10 et 11, caractérisé en ce que lesdits moyens (20) comparateurs à seuil sont constitués par :

— une pluralité de comparateurs ou circuits à seuil élémentaires ($201_1$ à 20k) un des circuits comparateurs élémentaires ($20_{11}, 20_{12}, 20_2$) recevant le signal délivré par l'anode du premier (P11) respectivement deuxième (P12) ou troisième (P2) photomultiplicateurs multidynodes, les autres circuits (20k) comparateurs élémentaires recevant sur une première borne d'entrée le signal délivré par une dynode du premier (P11), deuxième (P12) et troisième (P2) photomultiplicateur et sur une deuxième borne d'entrée de blocage un signal d'impulsion négative délivré par un monostable de coïncidence (60),

— une pluralité de circuits ET(21, 22,... 2k) l'un des circuits ET(21) recevant sur une première borne d'entrée le signal délivré par le circuit comparateur à seuil ($201_1$) respectivement ($201_2$) et sur une autre borne d'entrée le signal délivré par le circuit comparateur à seuil ($20_2$) par l'intermédiaire d'une ligne à retard (401), les autres circuits ET(22 à 2k) recevant sur une première borne d'entrée le signal délivré par le circuit ET(21) et sur une deuxième entrée le signal délivré par les circuits comparateurs à seuil ($20_3$ à 20k), les sorties desdits circuits ET(22 à 2k) et du monostable (220) étant reliées à un microordinateur d'exploitation (300).

13. Radiochromatogramme selon la revendication 12, caractérisé en ce que les moyens de transcodage sont constitués par un programme de traitement mémorisé dans les mémoires auxiliaires du microordinateur, ledit programme pour déterminer l'ordre i des fibres (fi11, fi12 ; fi2 ou fi21, fi22) siège d'une détection par scintillation permettant de résoudre pour chaque nappe ou nappe élémentaire N11, N12 et N2 ou N21, N22 l'équation logique de la revendication 11.

## Patentansprüche

1. Radiochromatogramm mit sehr hoher Auflösung für ionisierende Strahlen, bestehend aus mindestens einem Gitter (R) aus einer Anordnung von fadenförmigen Elementen der Ordnung i, die für eine räumliche Bestimmung an einer Oberfläche zur Analyse entlang vorbestimmter markierter Achsen geeignet und empfindlich sind, und die in der Lage sind, durch Szintillation die Strahlen und die durch diese Feststellung produzierte Übertragung der Lichtstrahlung festzustellen, wobei das Gitter (R) aus zwei Lagen N1 und N2 gebildet ist, die aus optischen Fasern bestehen, wobei jede Faser gemäß einem rechteckigen Segment angeordnet ist, welches zwei aufeinander senkrecht stehende Richtungen d1, d2 bildet und welches eine Analysen-Ebene oder -Oberfläche begrenzt, wobei mindestens eine der Schichten N1 in zwei Schichtelemente N11 und N12 unterteilt ist, die in Richtung senkrecht zu der Analysen-Ebene oder -Oberfläche in einem Abstand (HP) zueinander angeordnet sind und deren Fasern (fi11, fi12) parallel verlaufen, **dadurch gekennzeichnet,** daß die optischen Fasern (fi11, fi12 ; fi2 oder fi21, fi22) auf der Höhe ihrer Enden derart angeordnet sind, daß sie Unteranordnungen Fj,r mit r = 111, 112, 121, 122 ; 21, 22 oder 211, 212, 221, 222 bilden, wobei r = abc die Enden des Index c (1 oder 2) der Fasern des Schichtelementes Nab und r = ac die Enden des Index c der Fasern des Schichtelementes Na bezeichnet, wobei die Unteranordnungen

— Fj,r einerseits mit r = 111, 112, 121, 122 sich aus dem ersten Schichtelement N11 beziehungsweise aus dem zweiten Schichtelement N12, welches die erste Schicht N1 bildet, ergeben

— Fj,r andererseits mit r = 21, 22 sich aus der zweiten Schicht N2 ergeben, sonst ergeben sich Fj,r mit r = 211, 212, 221, 222 auch aus dem ersten Schichtelement N21 beziehungsweise aus dem zweiten Schichtelement N22, welches die zweite Schicht N2 bildet, wobei sie so angeordnet sind, daß die Enden c = 1 und c = 2 derselben Faser fiab oder fia unterschiedlichen Unteranordnungen Fj,ab1 und Fj',ab2 oder Fj,a1 und Fj',a2 der anderen Ordnung j angehören, und daß die Unteranordnungen mit einer ersten beziehungsweise zweiten Mehrzahl von Detektoren Sk,r mit r = 111, 112, 121, 122 beziehungsweise mit r = 21, 22, oder 211, 212, 221, 222, die aus zwei oder einer Photomultiplier-Multidynode (P11, P12 ; P2 oder P21, P22) gebildet sind, verbunden sind, wobei jede Photokathode mit jeder Photomultiplier-Multidynode der Unteranordnungen Fj,r desselben r verbunden ist.

2. Radiochromatogramm nach Anspruch 1, dadurch gekennzeichnet, daß die optischen Fasern (fi11, fi12), die die Schichtelemente N11 und N12 bilden, in derselben Richtung des Musters der Schicht N2, die durch die optischen Fasern (fi2) gebildet ist, angeordnet sind.

3. Radiochromatogramm nach Anspruch 1, dadurch gekennzeichnet, daß die optischen Fasern (fi11, fi12), die die Schichtelemente N11 und N12 bilden, auf beiden Seiten der Schicht N2, die aus den optischen Fasern (fi2) gebildet ist, angeordnet sind.

4. Radiochromatogramm nach Anspruch 1, dadurch gekennzeichnet, daß die Schichten N1 und N2 in zwei Schichtelemente N11, N12 und N21, N22 unterteilt sind, wobei die optischen Fasern (fi11, fi12; fi21, fi22), die die Schichtelemente N11, N12 und N21, N22 bilden, in die verschachtelt angeordneten Schichtelemente eingefügt sind.

5. Radiochromatogramm nach einem der vorhergehenden Anspruche, dadurch gekennzeichnet, daß die optischen Fasern (fi11, fi12 ; fi2 oder fi21, fi22) optische Fasern gleichen Durchmessers sind.

6. Radiochromatogramm nach einem der Ansprüche 1 bis 5, dadurch gekennzeichnet, daß die optischen Fasern (fi11) des ersten Schichtelementes N11 und die optischen Fasern (fi12) des zweiten Schichtelementes N12 derselben Schicht N1 unterschiedlichen Durchmesser haben, wobei die optischen Fasern des kleineren Durchmessers geeignet sind, das Schichtelement N11 zu bilden, welches dazu bestimmt ist, die Analysenoberfläche zu bilden.

7. Radiochromatogramm nach Anspruch 6, dadurch gekennzeichnet, daß der Durchmesser der optischen Fasern (fi11, fi12 ; fi2 oder fi21, fi22) im Verhältnis 1/2 zueinander steht.

8. Radiochromatogramm nach Anspruch 1, dadurch gekennzeichnet, daß die Photomultiplier-Multidynoden auto-synchronisiert sind.

9. Radiochromatogramm nach Anspruch 1, dadurch gekennzeichnet, daß es weiterhin umfaßt :
— Einrichtungen zum Feststellen der Koinzidenz des von den Detektoreinrichtungen Sk,r desselben r gelieferten Signales,
— Einrichtungen, die die Transcodierung von der Koinzidenz der Feststellungen der zwei Detektoreinrichtungen Sk,r ; Sk + p,r desselben r ermöglichen, un die Ordnung i der entsprechenden optischen Faser (fi11, fi12 ; fi2 oder fi21, fi22) zu bilden.

10. Radiochromatogramm nach Anspruch 9, dadurch gekennzeichnet, daß die Einrichtungen zum Feststellen der Koinzidenz, die an jede Detektoreinrichtung Sk,r angeschlossen ist :
— Verstärkereinrichtungen (10), welche ein verstärktes Signal liefern,
— Schwellwertkomparatoreinrichtungen (20), die das verstärkte Signal empfangen und ein logisches Signal liefern, wenn ein verstärktes Signal mit einem Wert vorliegt, der höher ist als der Schwellenwert, und
— Einrichtungen (30) zum logischen Vergleichen des Zustandes des logischen Signales, welches von der Schwellwertkomparatoreinrichtungen geliefert wird, aufweisen.

11. Radiochromatogramm nach Anspruch 10, dadurch gekennzeichnet, daß die Ordnung i der Faser, die einer Feststellung durch Szintillation unterworfen ist, durch folgende logische Gleichung gegeben ist :

$$i = Fj,r,i \cap Fj + p,r,i$$

in welcher Fj,r,i und Fj + p,r,i die Unteranornungen der Ordnung j repräsentieren und j = p einer gleichen Schicht oder Schichtelement, eines gleichen r, für welche die gelieferten logischen Signale von den entsprechenden Detektorstrahlen Sk,r desselben r und der Ordnung K = j und k' = j + p den Wert 1 haben.

12. Radiochromatogramm nach Anspruch 10 oder 11, dadurch gekennzeichnet, daß die Einrichtungen (20) zum Schwellwertvergleichen :
— eine Mehrzahl von Komparatoren oder Kreise mit Schwellwertelementen (2011 bis 20k), wobei einer der Kreise mit Komparatorelementen (2011, 2012, 202) das Signal, welches von der Anode der ersten (P11) beziehungsweise zweiten (P12) oder dritten (P2) Photomultiplier-Multidynode geliefert wird, empfängt und wobei die anderen Kreise (20k) mit Komparatorelementen über eine erste Eingangsklemme das Signal, welches von einer Dynode des ersten (P11), des zweiten (P12) und des dritten (P2) Photomultipliers und über eine zweite Eingangsklemmezum Sperren einen negativen Signalimpuls, welcher von einem Koinzidenzmonoflop (60) geliefert wird, empfangen und
— eine Mehrzahl von Kreisen ET(21, 22,... 2k), wobei die Kreise ET(21) über eine erste Eingangsklemme das Signal, welches von dem Kreis zum Schwellwertvergleichen (2011) beziehungsweise (2012) und über eine weitere Eingangsklemme von dem Kreis zum Schwellwertvergleichen (202) mittels einer Verzögerungsstufe (401) geliefert wird, empfangen und wobei die anderen Kreise ET(22 bis 2k) über eine erste Eingangsklemme das Signal, welches von dem Kreis ET(21) geliefert wird, und über eines zweiten Eingang das Signal, welches von den Kreisen zum Schwellwertvergleichen (203 bis 20k) geliefert wird, empfangen, wobei die Ausgange der Kreise ET(22 bis 2k) und des Monoflops (220) an einen Mikroprozessor (300) angeschlossen sind, gebildet sind.

13. Radiochromatogramm nach Anspruch 12, dadurch gekennzeichnet, daß die Einrichtungen zum Transcodieren aus einem in den Hilfsspeichern des Mikroprozessors gespeicherten Arbeitsprogramm besteht, wobei das Programm die Ordnung i der Fasern (fi11, fi12 ; fi2 oder fi21, fi22), die einer Feststellung durch Szintillation unterworfen ist, bestimmt und es erlaubt, für jede Schicht oder Schichtelement N11, N12 und N2 oder N21, N22 die logische Gleichung des Anspruches 11 zu lösen.

## Claims

1. Very high resolution autofluoroscope for ionizing radiation comprising at least one array (R) made up of a set of filament-like members of rank $i$ adapted to enable spatial marking of a surface to be analyzed according to a specific frame of reference and adapted to detect said radiation by scintillation and to transmit light produced by such detection, said array (R) being formed by two groups N1 and N2 of optical fibers, each fiber being disposed along a respective straight line segment defining two orthogonal directions $d1$, $d2$ delimiting an analysis plane or surface, at least one of the groups N1 is subdivided into two elementary groups N11 and N12 which are spaced in a direction perpendicular to the analysis plane or surface by a distance (HP) and the fibers (fi11, fi12) of which are parallel, characterized in that said optical fibers (fi11, fi12 ; fi2 or fi21, fi22) are grouped at one end to form subsets (Fj,r) with r = 111, 112, 121, 122; 21, 22 or 211, 212, 221, 222, r = abc designating the end of index c (1 or 2) of fibers of the elementary group $N_{ab}$, and r = ac designating the end of index c of fibers of the group $N_a$, said subsets

  — Fj,r with r = 111, 112, 121, 122 so resulting from the first N11 respectively second N12 elementary group constituting the first group N1, on the one land,

  — Fj,r with r = 21, 22 so resulting from the second group N2 or Fj,r with r = 211, 212, 221, 222 so resulting from the first N21 respectively second N22 elementary group constituting the second group N2, on the other land, being formed so that ends c = 1 and c = 2 of a same fiber fiab or fia respectively belong to subsets Fj,ab1 and Fj',ab2 or Fj,a1 and Fj',a2 of different rank j, and said subsets being coupled to a first, respectively second, plurality of detector means Sk,r, said first, respectively second, plurality of detector means with r = 111, 112, 121, 122, respectively r = 21, 22 or 211, 212, 221 ; 222, comprise two or one multidynode photomultiplier(s) (P11, P12; P2 or P21, P22), each photocathode of each multidynode photomultiplier being coupled to one of subsets Fj,r or same r.

2. Autofluoroscope according to claim 1, characterized in that the optical fibers (fi11, fi12) constituting the elementary groups N11 and N12 are on the same side of the group N2 of optical fibers (fi2).

3. Autofluoroscope according to claim 1, characterized in that the optical fibers (fi11, fi12) constituting the elementary groups N11 and N12 are on opposite sides of the group N2 of optical fibers (fi2).

4. Autofluoroscope according to claim 1, characterized in that said groups N1 and N2 are subdivided into elementary groups N11, N12 and N21, N22 and the optical fibers (fi11, fi12 ; fi21, fi22) constituting said elementary groups N11, N12 and N21, N22 are interleaved, said elementary groups being interleaved.

5. Autofluoroscope according to any one of the preceding claims, characterized in that said optical fibers (fi11, fi12, fi2 or fi21, fi22) have the same diameter.

6. Autofluoroscope according to any one of claims 1 to 5, characterized in that said optical fibers (fi11) of the first elementary group N11 and the optical fibers (fi12) of the second elementary group N12 of a same first group N1 have different diameters, the optical fibers of the smallest diameter being adapted to constitute the elementary group N11 adapted to form the analysis surface.

7. Autofluoroscope according to claim 6, characterized in that the optical fibers (fi11, fi12 ; fi2 or fi21, fi22) have diameters in the ratio 1/2.

8. Autofluoroscope according to claim 1, characterized in that the multidynode photomultipliers are self-synchronized.

9. Autofluoroscope according to claim 1, characterized in that it further comprises :

  — means for detecting coincidences in the signal delivered by the detector means Sk,r of the same level r, and

  — transcoding means for establishing the rank $i$ of the corresponding optical fiber element (fi11, fi12 ; fi2 or fi21, fi22) on the basis of coincident detection by two detector means Sk,r ; Sk + p,r.

10. Autofluoroscope according to claim 9, characterized in that said coincidence detection means comprise, coupled to each detector means Sk,r :

  — amplifier means (10) delivering an amplified signal,

  — threshold comparator means (20) receiving said amplified signal and delivering a logic signal in the presence of an amplified signal above the threshold value, and

— logic comparator means (30) operating on the state of the logic signal delivered by the threshold comparator means.

11. Autofluoroscope according to claim 10, characterized in that the rank $i$ of the fiber affected by detection by scintillation is given by the logic equation :

$$i = Fj,r,i \cap Fj + p,r,i$$

in which $Fj,r,i$ and $Fj + p,r,i$ represent the subsets of rank $j$ and $j + p$ of the same group or elementary group of the same $r$ for which the logic signal delivered by the corresponding detector means $Sk,r$ of the same $r$ and of rank $k = j$ and $k' = j + p$ has the value 1.

12. Autofluoroscope according to claims 10 and 11, characterized in that said threshold comparator means (20) comprise :

— a plurality of elementary threshold comparators or circuits ($20_{11}$ through $20_k$), one of the elementary comparator circuits ($20_{11}$, $20_{12}$, $20_2$) receiving the signal delivered by the anode of the first multidynode photomultiplier (P11) or second multidynode photomultiplier (P12) or third multidynode photomultiplier (P2), the other elementary comparator circuits ($20_k$) receiving on a first input the signal delivered by a dynode of the first photomultiplier (P11), second photomultiplier (P12) or third photomultiplier (P2) and on a blocking second input a negative pulse signal delivered by a coincidence monostable (60), and,

— a plurality of AND circuits (21, 22...., $2k$), one of the AND circuits (21) receiving on a first input the signal delivered by the threshold comparator circuit ($20_{11}$) or ($20_{12}$) and on another input the signal delivered by the threshold comparator circuit ($20_2$) through the intermediary of a delay line (401), the other AND circuits (22 through $2k$) receiving on a first input the signal delivered by the AND circuit (21) and on a second input the signal delivered by the threshold comparator circuits ($20_3$ through $20_k$), the outputs of said AND circuits (22 through $2k$) and of the monostable (220) being connected to a controlling microcomputer (300).

13. Autofluoroscope according to claim 12, characterized in that the transcoding means comprise a processing program memorized in auxiliary memories of the microcomputer, said program for determining the rank $i$ of the fibers ($fi11$, $fi12$ ; $fi2$ or $fi21$, $fi22$) affected by scintillation detection making it possible to solve for each group or elementary group N11, N12 and N2 or N21, N22 the logic equation from claim 11.

## FIG_1

EP 0 323 324 B1

FIG.2a

FIG.2b

FIG.2c

## FIG. 2d

Gel épaisseur nulle positionné a
$H_2 = 0$ $H_1 = 0,1mm$

• fibres 0,5mm
X1, X2
+ fibres X1 : 0,25mm
X2 : 0,50mm

FIG_3a

Gel $H_2 = 0,3mm$ positionné a
$H_1 = 0,1mm$

• Fibres = 0,5mm
X1, X2
+ Fibres X1 : 0,25mm
X2 : 0,50mm

FIG_3b

FIG.4a

FIG.4b

FIG.4c

## FIG.5a

## FIG.5b